# EUROPEAN PATENT APPLICATION

(11) **EP 0 563 713 A2**
(43) Date of publication of application: **06.10.1993**
(21) Application number: 93104586.8
(22) Date of filing: 19.03.1993
(51) Int. Cl.: G07C 9/00, B60C 23/04

(54) **Remote identification sensor system**

(30) Priority: 01.04.1992 US 861043
(71) Applicant: Hughes Aircraft Company, Los Angeles, California 90045-0066 (US)
(72) Inventor: Armstrong, William E., Mission Viejo, California 92691 (US)
(74) Representative: Gahlert, Stefan, Dr.-Ing.

(57) **Abstract**

A transponder (14) positioned in a remote or inaccessible location that cannot readily be connected by wire includes an identification (ID) tag number encoded in its memory and a condition sensor that feeds to the memory electrical signals (12) representing sensed conditions at the remote location. The sensor and ID tag memory, together with data assembly and control logic circuitry, are all formed on a single integrated chip and packaged together with an inductive coil antenna (20) for placement in an inaccessible location, such as, for example, the inside of a rotating tire or a moving part of a shock absorber. An exciter reader (10) transmits an RF signal (12) that is inductively coupled to the transponder so as to provide power to the transponder (14) and to enable the transponder (14) to read and transmit an assembled data signal (22) including a transponder ID section (24) and a sensed data section (26).

## Description

### BACKGROUND OF THE INVENTION

### 1. Field of the Invention

The present invention relates to data sensing, and more particularly concerns remote sensing of selected conditions and transmission of such sensed data together with a signal identifying the sensing location.

### 2. Description of Related Art

A class of remote sensing devices has been developed for transmitting identifications of items at various locations. For example, U. S. Patent No. 4,730,188, to Thomas A. Milheiser shows a passive integrated transponder that is attached to or embedded in an item to be identified. The transponder is excited by means of an inductive coupling from an exciter/reader, and upon receipt of an interrogation signal responds by transmitting an identification code signal that has been permanently stored in a transponder memory. The interrogated transponder arrangement of the Milheiser patent can provide only for identification of the transponder itself. No other information is communicated.

To obtain data concerning sensed conditions, sensors of various types have been directly wired to reader electronics and provide satisfactory operation in certain limited types of locations. Where the sensing device is positioned in a fixed, readily accessible location, connection of wires to the sensor is readily accomplished. However, where it is desired to sense conditions in moving, rotating, pressurized, evacuated or otherwise inaccessible environments, wired connection to the sensing device may not be feasible.

Thus, there is a significant need for the remote transmission of sensed data by simple, inexpensive and readily usable equipment that needs no wire connections. However, acquisition of sensor data and making such data available to the user is difficult or impossible with presently known equipment.

Accordingly, it is an object of the present invention to provide methods and apparatus that avoid or minimize above mentioned problems.

### SUMMARY OF THE INVENTION

In carrying out principles of the present invention in accordance with a preferred embodiment thereof an exciter/reader includes means for transmitting an excitation signal and means for detecting a responsive return signal, wherein the return signal includes both an identification section and a data section. Transponder sensor means are responsive to the excitation signal for transmitting a return signal having identification and data sections. The identification section includes information that uniquely identifies the transponder, whereas the data section includes information representing conditions sensed at the transponder location. According to a feature of the invention, the transponder is provided in a simple, miniaturized and inexpensive form by producing one or a pair of integrated circuit chips all of the transponder circuitry and the sensors.

### BRIEF DESCRIPTION OF THE DRAWINGS

In the accompanying drawings:
FIG. 1 is a simplified block diagram of a system employing an exciter/reader and a sensor ID transponder embodying principles of the present invention;
FIG. 2 is a block diagram showing further details of the circuit arrangement of the transponder; and
FIG. 3 illustrates an exemplary arrangement of transponders embodying principles of the present invention employed for control of pressure in a vehicle shock absorber.

### DESCRIPTION OF PREFERRED EMBODIMENTS

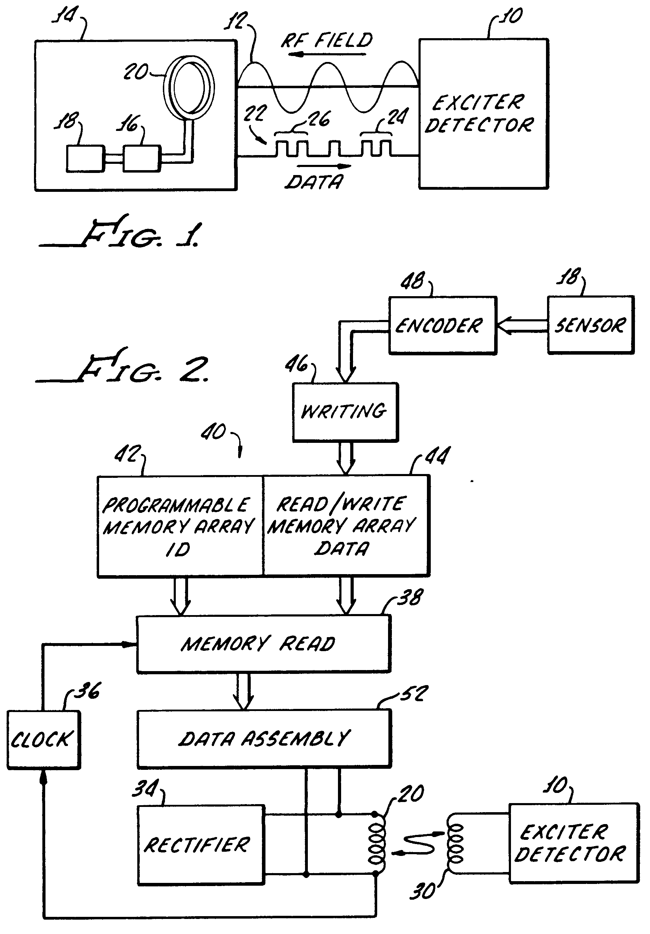

As shown in the broad block diagram of FIG. 1, an exciter/reader or an exciter/detector 10 transmits an RF field, indicated by curve 12, to a transponder 14 that includes an integrated circuit (IC) chip 16. Chip 16 includes control logic and an identification memory. The transponder also has a sensor IC chip 18 including sensors that generate electrical signals representing a condition to be sensed. Sensor 18 may be any one of many well known types of sensors, including pressure sensors, temperature sensors, optical sensors, infrared sensors, accelerometers and the like. An exemplary pressure sensor, such as the sensor made by Delco Electronics, includes a chip having a cavity formed thereon that defines a thin film on which is formed a plurality of resistive elements. Upon being subjected to different pressures, the thin film bends, thereby flexing the thin resistors on the sensor film to vary the resistance and thus generate electrical signals that represent sensed pressure. The sensor generating elements, such as the strain sensitive resistors of sensor 18, are connected to the memory and logic circuit 16 which assembles a signal for transmission by an antenna 20 formed by a coil of conductive wire. The antenna forms part of the transponder 14 for both receiving and transmitting. The transponder, via its antenna coil 20, transmits a data signal indicated at 22, having an ID section 24 and a sensed data section 26. The combined ID and data signal are received by the exciter, detected and read for use at the station or location of the exciter 10.

The exciter/detector 10 and transponder 14, without its sensor 18, and without the assembly and transmission of the sensed data from sensor 18, are substantially similar to the transponder exciter system shown in the patent to Milheiser, 4,730,188. In this arrangement the exciter antenna (not shown in FIG. 1) produces a magnetic flux that is inductively coupled to the antenna 20 of the transponder. A variety of proximity detectors known as Radio Frequency Identification Devices, made by the Hughes Identification Devices Subsidiary of Hughes Aircraft Company, incorporate this type of RF exciter and transponder system. Such detectors include Hughes ProxCard® proximity identification cards and other radio frequency identification (RFID) systems. Proxcard® devices have ranges in the order of 2 to 15 inches and dimensions as small as 1.4 cm in diameter and 0.64 cm thick. The arrangements of the Milheiser patent and the Proxcard® devices of Hughes can only provide for identification. They include no condition sensing and are unable to perform remote sensing.

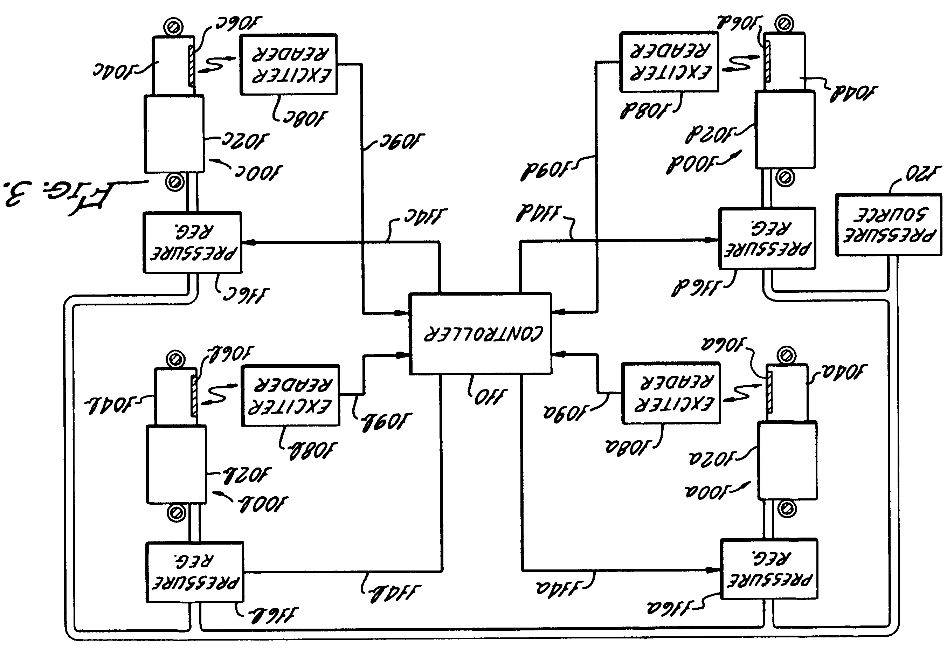

According to principles of the present invention, as embodied in arrangements specifically disclosed herein, a sensor chip is integrated with or packaged with the transponder circuitry so that the sensor is incorporated with the miniature transponder and mounted in a remote location to which wire connections are neither convenient nor feasible. Thus, as illustrated in FIG. 2, exciter/detector 10 includes a coil 30 forming an antenna which transmits a radio frequency signal that is inductively coupled to the coil antenna 20 of the transponder, thereby inducing a radio frequency current in the antenna 20. This AC current is fed to a rectifier circuit 34 of the transponder chip which provides DC power for the circuitry of the chip. The AC signal also is fed to a clock circuit 36 that operates a memory read circuit or scanner 38. Scanner 38 reads a memory array 40 of the chip. Memory 40 includes a programmable or read only memory array section 42 containing the fixed identification code that uniquely identifies this particular transponder. The memory 40 also includes a read/write section 44 that can be written into by a writing circuit 46 that receives the output of a translator or encoder 48, which in turn is responsive to the sensor 18. Signals generated by sensor 18 representing conditions such as pressure, temperature, acceleration, etc. at the transponder are fed to the encoder 48, which digitizes these signals and, via a writing circuit 46, writes the appropriate digits into locations of the read/write data memory section 44.

Memory read scanner 38 scans both sections of the memory and transmits an output from the memory to data assembly circuitry generally indicated at 52. The data assembly circuitry 52 may provide for insertion of a synchronizing signal and Manchester encoding of the assembled signal. The assembled signal is transmitted from antenna 20 as alternating current signals, having one or the other of two frequencies. Manchester encoding of the ID code of the ID tag, synchronization insertion, and frequency shifting, but without any condition sensing or assembly of sensed condition data, are described in the Milheiser patent 4,730,188.

According to the disclosed embodiment of the present invention, the transmitted signal includes both a sensed data section and an identification section. This signal is received by the exciter antenna 30 and detected by circuitry, including a frequency shift keying (FSK) demodulator.

Upon excitation by receipt of a signal from exciter 10, the transponder 14 is energized to cause its sensor 18 to write presently sensed data into the sensor section of the memory so that sensed condition data may be read out together with the fixed ID of the fixed memory section for transmission back to the exciter.

As mentioned above, an RF sensor ID system of this type has a wide variety of applications, including use with many different types of sensors at remote or inaccessible locations. For example, a transponder of the type illustrated herein and incorporating a pressure sensor may be mounted within each tire of a vehicle, such as a car, truck or the like, so that internal pressure of the tires may be transmitted to an external exciter/detector. The exciter/detector is mounted on a fixed surface in proximity to but out of contact with the rotating tire. Similarly, as but one of many other applications, an accelerometer may be mounted within a moving section of a vehicle shock absorber so as to sense accelerations experienced by the shock absorber as the vehicle to which the shock absorber is mounted travels over a rough road. Sensed acceleration enables control of pressure to the shock absorber so that the stiffness of the latter is controlled according to the terrain that is traversed.

An example of such a pressure controlled shock absorber system is shown in FIG. 3, in which a plurality of shock absorbers 100a, 100b, 100c and 100d have fixed portions 102a, 102b, 102c and 102d, respectively, mounted to a fixed portion of a vehicle and include a movable portion 104a, 104b, 104c and 104d connected to the wheel suspension so that the movable portion 104a moves up and down relative to the fixed portion 102a as the wheel moves up and down to follow an irregular road surface. Each movable portion 104 of each shock absorber carries within it, or on an outer surface thereof, a transponder 106a, 106b, 106c and 106d, respectively, of the type illustrated and described in connection with FIG. 2. A cooperating exciter/reader 108a, 108b, 108c and 108d, respectively, for each transponder, is mounted on fixed vehicle structure closely adjacent to the moving shock absorber part 104 and its transponder 106. The several exciters activate the proximate transponders, receive the return signals, which include a signal section that identifies the individual transponder (e.g. shock absorber) and a signal section that represents the acceleration experienced by the identified shock absorber. The return signals are fed by wires 109a, 109b, 109c, 109d to a central controller or reader/exciter 110, which computes a desired pressure, and, via lines 114a, 114b, 114c and 114d, operate pressure regulators 116a, 116b, 116c and 116d that receive pressure from a common source 120 and feed the regulated pressure to the individual shock absorbers 100. Controller 110 may include a multiplexing controller, such as the Industrial Multiplexing Reader Model No. 1S52001 made by Hughes Identification Devices. Such a reader may send an enable signal to each of the exciter/readers 108 in an established sequence, causing each of these, in sequence, to transmit an interrogation signal to its associated transponder and to receive the return signal, containing both ID and sensed acceleration data, for transmission to the controller 110 for control of the pressure to the individual shock absorbers. The Industrial Multiplexing Reader decodes the transmitted information and provides it for use to the controller for control of the pressure regulators.

It will be readily understood that the shock absorber acceleration sensing system illustrated in FIG. 3 is merely exemplary of the many different types of environments and applications in which the disclosed radio frequency sensor identification system may be employed. In addition to shock absorber acceleration sensing and vehicle tire pressure sensing, the system may be employed for remote reading of identification of pressurized gas bottles together with their internal pressures.

## Claims

1. A remote sensor system characterized by:
an exciter/reader (10; 108a, b, c, d) including means for transmitting an excitation signal (12) and means for detecting a responsive return signal (22), wherein the return signal (22) includes an identification section (24) and a data section (26), and
transponder sensor means (14; 106a, b, c, d) responsive to said excitation signal (12) for transmitting a return signal (22) having an identification section (24) and a data section (26), said transponder sensor means (14; 106a, b, c, d) including a sensor (18) for generating condition signals representing a condition to which said sensor (18) is exposed, said identification section (24) including information that uniquely identifies said transponder sensor means (14; 106a, b, c, d), and said data section (26) including information representing said condition signals.

2. The system of claim 1, characterized in that said transponder sensor means (14; 106a, b, c, d) includes an antenna (20) and integrated circuit chip means (16) coupled with said antenna (20).

3. The system of claim 1 or 2, characterized in that said exciter/reader (10; 108a, b, c, d) and said transponder sensor means (14; 106a, b, c, d) include respective antennas (30; 20) that are inductively coupled to one another.

4. The system of any of claims 1 to 3, characterized in that said exciter/reader means (10; 108a, b, c, d) are formed on an IC chip, and wherein said means for transmitting a return signal are formed on an IC chip.

5. The system of any of the preceding claims, characterized in that said transponder sensor means (14; 106a, b, c, d) are formed on an IC chip, and wherein said means for transmitting a return signal (22) are formed on an IC chip.

6. The system of any of the preceding claims, including a vehicle shock absorber (100a, b, c, d) mounted to a vehicle structure, and having a moving part (104a, b, c, d), said transponder sensor means (106a, b, c, d) being fixed to said moving part (104a, b, c, d) and including an acceleration sensor, and said exciter/reader means (108a, b, c, d) being carried by said structure in a position spaced from and proximate to said moving part (104a, b, c, d).

7. The system of any of the preceding claims, characterized in that said transponder sensor means (106a, b, c, d) are inductively coupled to said exciter/reader means (108a, b, c, d).

8. The system of claim 6 or 7, characterized in that said transponder sensor means (106a, b, c, d) are mounted within said moving part (104a, b, c, d) and said exciter/reader means (108a, b, c, d) are mounted to move with said part (104a, b, c, d).

9. The system of any of the preceding claims, characterized in that said transponder sensor means (14; 106a, b, c, d) includes a memory having a first memory section (42) that stores transponder identification information and a second memory section (44) including means in said transponder sensor means (14; 106a, b, c, d) for writing said condition signals into said second memory section (44), and including means for reading both said memory sections (42, 44) to produce said return signal (22).

10. A method for acquiring condition information at a remote location comprising the steps of:
transmitting an excitation signal (12) from an exciter location,
receiving said signal (12) at a remote location that is spaced from said exciter location,
sensing predetermined conditions at said remote location,
generating condition signals (26) that represent conditions sensed at said remote location,
generating an identification signal (24) that uniquely identifies said remote location,
transmitting said identification signal and condition signals (24, 26) to said exciter location, and
reading said transmitted indentification (24) and condition (26) signals at said exciter location.

11. The method of claim 10 wherein said step of transmitting an excitation signal (12) comprises means for producing a magnetic flux that varies at a radio frequency.

12. The method of claim 11 wherein said step of receiving comprises employing a coil (20) at said remote location that is inductively energized by said magnetic flux.

13. The method of any of claims 10 to 12 including the step of providing at said remote location a memory having a read only ID section (42) and a read/write data section (44), said ID section (42) having a unique ID code stored therein, and including the step of writing said condition signals into said data section (44), said step of transmitting identification and condition signals (24, 26) comprising reading both said memory sections (42, 44) and assembling a return signal (22) having an identification portion (24) and a data portion (26).

14. The method of any of claims 10 to 13 wherein said steps of sensing and generating comprise employing a single chip (16) to generate condition signals and to generate an identification signal.
